# EUROPEAN PATENT APPLICATION

(11) **EP 2 757 660 A1**
(43) Date of publication of application: **23.07.2014**
(21) Application number: 12832165.0
(22) Date of filing: 14.09.2012
(51) Int. Cl.: H02J 17/00

(54) **NON-CONTACT POWER FEED DEVICE AND NON-CONTACT POWER TRANSMISSION DEVICE**

(30) Priority: 14.09.2011 JP 2011200475
(71) Applicant: Panasonic Corporation, Osaka 571-8501 (JP)
(72) Inventor: KITAIZUMI, Takeshi, Osaka 540-6207 (JP); SHIGEOKA, Takehiko, Osaka 540-6207 (JP)
(74) Representative: Eisenführ Speiser
(86) International application number: PCT/JP2012/005877
(87) International publication number: WO 2013/038695

(57) **Abstract**

A non-contact power receiving device (6) utilizes, as a power-supply device, an induction heating device (1) equipped with a load-temperature detecting function of detecting light from a load to detect the temperature of the load and of controlling an induction heating operation when the temperature of the load is equal to or higher than a predetermined temperature, wherein an electric-power-reception-side control portion (9) in the non-contact power receiving device is adapted to cause a light emitting portion (21) to emit light to operate the load-temperature detecting function in the induction heating device for controlling the supply of electric power from the induction heating device to the non-contact power receiving device, when the value detected by a state detection portion (20) is equal to or more than a set value.

## Description

### Technical Field

The present invention relates to non-contact power receiving devices which are adapted to utilize, as a power-supply device, an induction heating device for heating an object to be heated through a high-frequency magnetic field and, further, are placed on the induction heating device to be supplied with electric power using a high-frequency magnetic field from the induction heating device. Further, the present invention relates to non-contact power transmission devices including an induction heating device and a non-contact power receiving device.

### Background Art

Among conventional non-contact power receiving devices adapted to be supplied with electric power from induction heating devices used as power-supply devices, there have been power receiving devices provided with switches to enable users to manually perform manipulations for changing over between electric-power receiving operations and stopping of electric-power reception, while viewing the state of the usage thereof. Also, there have been power receiving devices adapted to separate a portion of the connection of the main circuit in the power receiving device under predetermined conditions, using a timer or through temperature detection, in order to realize stoppage of the electric power reception (refer to Patent Literature 1, for example).

Further, there have been conventional non-contact power transmission devices structured to include a power receiving device which is provided with dedicated signal transmission means for transmitting control signals, and an induction heating device as a power-supply device which is provided with dedicated signal receiving means for receiving signals from the power receiving device, such that the power-supply device is notified of the state of the power receiving device for controlling the electric power supplied to the power receiving device, in order to control the amount of electric power consumed by the power receiving device, the temperature of the power receiving device, and the like (refer to Patent Literature 2, for example).

Further, in the disclosure of the present specification, the term "non-contact" refers to electrically and mechanically un-coupled states and, also, covers states of contact between devices which are simply placed on each other.

### Citation List

### Patent Literatures

Patent Literaure 1: Unexamined Japanese Patent Publication No. H04-156242
Patent Literature 2: Unexamined Japanese Patent Publication No. HO5-184471

### Summary of Invention

### Technical Problem

However, with conventional non-contact power receiving devices adapted to be supplied with electricity from induction heating devices as described above, it has been possible to perform only simple control for manually starting/ stopping electric-power receiving operations and simple control for automatically stopping the electric power reception after the elapse of a preset time. Further, in order to perform electric power control and temperature control in such non-contact power receiving devices, it is necessary to transfer information between the non-contact power receiving device and the induction heating device as the power-supply device. Therefore, the induction heating device as the power-supply device is required to have a dedicated function necessary for transfer of information therebetween. This has induced the problem that induction heating devices usable as power-supply devices are restricted.

The present invention was made to overcome the aforementioned problems in conventional structures and aims at providing a non-contact power receiving device and a non-contact power transmission device which enable transfer of information between the non-contact power receiving device and an induction heating device, without necessitating incorporation of dedicated communication means in the appliances.

### Solution to Problem

In order to solve the aforementioned problems, a non-contact power receiving device according to the present invention is adapted to use, as a power-supply device, an induction heating device equipped with a load-temperature detecting functions of detecting light from a load to detect a temperature of the load and of controlling an induction heating operation when the temperature of the load is equal to or higher than a predetermined temperature, and the power receiving device comprises:
a load device adapted to be supplied with the high-frequency electric power from the induction heating device,
a state detection portion adapted to detect a state of the load device,
a light emitting portion adapted to generate an optical signal according to a detection signal indicative of the state of the load device which has been detected by the state detection portion, and
an electric-power-reception-side control portion adapted to control the light emitting portion,
wherein the electric-power-reception-side control portion is adapted to cause the light emitting portion to emit light to operate the load-temperature detecting function in the induction heating device for controlling the supply of the electric power from the induction heating device, when the value detected by the state detection portion is equal to or more than a set value.

With the non-contact power receiving device having the aforementioned structure according to the present invention, it is possible to perform various types of state controls such as temperature control, voltage control, and electric-current control, only by utilizing the load-temperature detecting function equipped in an ordinary induction heating device. This eliminates the necessity of incorporating dedicated communication means in the device. Therefore, with the non-contact power receiving device according to the present invention, it is possible to realize a non-contact power receiving device with excellent convenience, since there is less restriction on the induction heating device used as the power-supply device.

Also, a non-contact power transmission device according to the present invention comprises an induction heating device being equipped with a load-temperature detecting functions of detecting light from a load to detect a temperature of the load and of controlling an induction heating operation when the temperature of the load is equal to or higher than a predetermined temperature, and a non-contact power receiving device being adapted to be supplied with electric power through a high-frequency magnetic field from the induction heating device,
wherein the non-contact power receiving device comprises:
a load device adapted to be supplied with a high-frequency electric power from the induction heating device,
a state detection portion adapted to detect a state of the load device,
a light emitting portion adapted to generate an optical signal according to a detection signal indicative of the state of the load device which has been detected by the state detection portion, and
an electric-power-reception-side control portion adapted to control the light emitting portion,
wherein the electric-power-reception-side control portion is adapted to cause the light emitting portion to emit light to operate the load-temperature detecting function in the induction heating device for controlling the supply of the electric power from the induction heating device, when the value detected by the state detection portion is equal to or more than a set value.

With the non-contact power transmission device having the aforementioned structure according to the present invention, it is possible to perform various types of state controls such as temperature control, voltage control, and electric-current control, only by utilizing the load-temperature detecting function equipped in an ordinary induction heating device. This eliminates the necessity of incorporating dedicated communication means in the device. Therefore, with the non-contact power transmission device according to the present invention, it is possible to easily configure a power transmission device with a simple structure, since there is less restriction on the induction heating device used as the power-supply device.

### Advantageous Effects of Invention

With the present invention, it is possible to perform transfer of information between the non-contact power receiving device and the induction heating device, without necessitating incorporation of dedicated communication means in the appliances. This enables realization of a non-contact power receiving device and a non-contact power transmission device which are capable of electric-power transmission control with a simple structure and, thus, have excellent convenience.

### Brief Description of Drawings

Fig. 1 is a view illustrating the structure of a non-contact power transmission device including a non-contact power receiving device according to a first embodiment of the present invention.
Fig. 2 is a view illustrating an example of the structure of the non-contact power transmission device according to the first embodiment.
Fig. 3 is a view illustrating another example of the structure of the non-contact power transmission device according to the first embodiment.
Fig. 4 is a view illustrating yet another example of the structure of the non-contact power transmission device according to the first embodiment.
Fig. 5 is a view illustrating the structure of a non-contact power transmission device according to a second embodiment of the present invention.
Fig. 6 is a view illustrating the structure of a non-contact power transmission device according to a third embodiment of the present invention.

### Description of Embodiments

A non-contact power receiving device according to a first aspect of the present invention is adapted to use, as a power-supply device, an induction heating device be equipped with a load-temperature detecting functions of detecting light from a load to detect a temperature of the load and of controlling an induction heating operation when the temperature of the load is equal to or higher than a predetermined temperature, and the non-contact power receiving device comprises:
a load device adapted to be supplied with the high-frequency electric power from the induction heating device,
a state detection portion adapted to detect a state of the load device,
a light emitting portion adapted to generate an optical signal according to a detection signal indicative of the state of the load device which has been detected by the state detection portion, and
an electric-power-reception-side control portion adapted to control the light emitting portion,
wherein the electric-power-reception-side control portion is adapted to cause the light emitting portion to emit light to operate the load-temperature detecting function in the induction heating device for controlling the supply of the electric power from the induction heating device, when the value detected by the state detection portion is equal to or more than a set value.

With the non-contact power receiving device having the aforementioned structure in the first aspect, it is possible to control the electric power supplied from the induction heating device depending on the state of the load device in the non-contact power receiving device, utilizing the function equipped in the induction heating device. This enables realization of a power receiving device with excellent convenience which is capable of electric power control with a simple structure, without necessitating preliminarily incorporating a new function in the induction heating device used as the power-supply device.

A non-contact power receiving device according to a second aspect of the present invention is configured that the non-contact power receiving device of the first aspect further comprises an electric-power receiving coil adapted to receive a high-frequency magnetic field from the induction heating device and to supply it to the load device,
wherein the electric-power-reception-side control portion is adapted to cause the light emitting portion to emit light to operate the load-temperature detecting function in the induction heating device for stopping the supply of the electric power to the electric-power receiving coil from the induction heating device, when the value detected by the state detection portion is equal to or more than a set value.

With the non-contact power receiving device having the aforementioned structure in the second aspect, it is possible to certainly control the electric power supplied to the electric-power receiving coil from the induction heating device, depending on the state of the load device in the non-contact power receiving device, utilizing the function equipped in the induction heating device. This enables realization of a non-contact power receiving device with excellent convenience which is capable of electric power control with a simple structure, without necessitating preliminarily incorporating a new function in the induction heating device used as the power-supply device.

A non-contact power receiving device according to a third aspect of the present invention is configured that the state detection portion in the first or the second aspect comprises a temperature detection portion for detecting a temperature in the load device, and the electric-power-reception-side control portion is adapted to control a time interval for which the light emitting portion emits light, such that the temperature detected by the temperature detection portion falls within a predetermined temperature range.

With the non-contact power receiving device having the aforementioned structure in the third aspect, it is possible to certainly control the electric power supplied from the induction heating device, depending on the temperature of the load device in the non-contact power receiving device, utilizing the function equipped in the induction heating device. This enables realization of a non-contact power receiving device with excellent convenience which is capable of electric power control with a simple structure, without necessitating preliminarily incorporating a new function in the induction heating device used as the power-supply device.

A non-contact power receiving device according to a fourth aspect of the present invention is configured that the state detection portion in the first or the second aspect comprises a voltage detection portion for detecting a voltage in the load device, and the electric-power-reception-side control portion is adapted to control a time interval for which the light emitting portion emits light, such that the voltage detection portion falls within a predetermined voltage range.

With the non-contact power receiving device having the aforementioned structure in the fourth aspect, it is possible to certainly control the electric power supplied from the induction heating device depending on the voltage in the load device in the non-contact power receiving device, utilizing the function equipped in the induction heating device. This enables realization of a non-contact power receiving device with excellent usability which is capable of controlling the input voltage to the load device and, thus, is capable of supplying a constant voltage to the load device, with a simple structure, without necessitating preliminarily incorporating a new function in the induction heating device used as the power-supply device.

A non-contact power receiving device according to a fifth aspect of the present invention is configured that the state detection portion of the first or the second aspect comprises an electric-current detection portion for detecting an electric current in the load device, and the electric-power-reception-side control portion is adapted to control a time interval for which the light emitting portion emits light, such that the electric-current detection portion falls within a predetermined electric-current range.

With the non-contact power receiving device having the aforementioned structure in the fifth aspect, it is possible to certainly control the electric power supplied from the induction heating device, depending on the electric current in the load device in the non-contact power receiving device, utilizing the function equipped in the induction heating device. This enables realization of a non-contact power receiving device with excellent usability which is capable of controlling an electric current flowing in the load device, electric power consumption therein and the like, without necessitating preliminarily incorporating a new function in the induction heating device used as the power-supply device.

A non-contact power transmission device according to a sixth aspect of the present invention comprises an induction heating device being equipped with a load-temperature detecting function of detecting light from a load to detect a temperature of the load and of controlling an induction heating operation when the temperature of the load is equal to or higher than a predetermined temperature, and a non-contact power receiving device being adapted to be supplied with electric power through a high-frequency magnetic field from the induction heating device,
wherein the non-contact power receiving device comprises:
a load device adapted to be supplied with a high-frequency electric power from the induction heating device,
a state detection portion adapted to detect a state of the load device,
a light emitting portion adapted to generate an optical signal according to a detection signal indicative of the state of the load device which has been detected by the state detection portion, and
an electric-power-reception-side control portion adapted to control the light emitting portion,
wherein the electric-power-reception-side control portion is adapted to cause the light emitting portion to emit light to operate the load-temperature detecting function in the induction heating device for controlling the supply of the electric power from the induction heating device, when the value detected by the state detection portion is equal to or more than a set value.

The non-contact power transmission device having the aforementioned structure in the sixth aspect is adapted to control the electric power supplied from the induction heating device, depending on the state of the load device in the non-contact power receiving device, utilizing the function equipped in the induction heating device. This enables realization of a non-contact power transmission device with excellent convenience which is capable of electric-power transmission control with a simple structure, without using a device having a specific function as the induction heating device used as the power-supply device.

Hereinafter, there will be described, in detail, embodiments of the non-contact power receiving device and the non-contact power transmission device according to the present invention, with reference to the drawings, as appropriate. For example, matters which have been already well known will not be described in detail, and structures which are substantially the same will not be described redundantly, in some cases. This is for preventing the following description from being unnecessarily redundant, in order to allow those skilled in the art to easily understand it.

Further, the present inventors provide the accompanying drawings and the following description for allowing those skilled in the art to sufficiently understand the present invention, and they are not intended to restrict the subjects defined in the claims.

The non-contact power receiving devices and the non-contact power transmission devices according to the following embodiments will be described with respect to examples where an induction heating cooker is employed as a power-supply device, but these structures are merely illustrative, and the present invention is not limited to the structures which will be described in the following embodiments and, also, covers non-contact power receiving devices and non-contact power transmission devices which have the technical characteristics of the present invention. Further, the present invention also covers appropriate combinations of arbitrary structures which will be described in the following respective embodiments, and the combined structures exert their respective effects.

### (First Embodiment)

Hereinafter, with reference to the accompanying drawings, there will be described a non-contact power receiving device, and a non-contact power transmission device constituted by the non-contact power receiving device and an induction heating device (induction heating cooker), according to a first embodiment of the present invention.

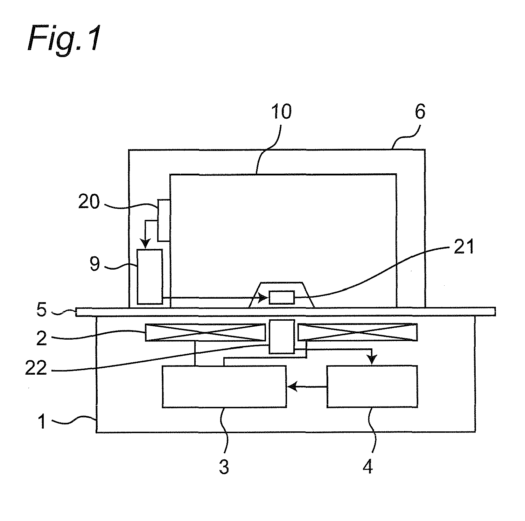

Fig. 1 is a structural view illustrating, in a circuit block manner, the internal structure of the non-contact power transmission device according to the first embodiment, illustrating a state where the non-contact power receiving device is placed on the induction heating device (the induction heating cooker). As illustrated in Fig. 1, the non-contact power receiving device 6 is placed on a top plate 5 in the induction heating cooker as the induction heating device 1, which is used as a power-supply device. The top plate 5 is formed from a plate member with optical transparency which is made of a crystallized glass, and the like. In the state where the non-contact power receiving device 6 is placed on the top plate 5 in the induction heating device 1, a light receiving portion 22 provided in the induction heating device 1, and a light emitting portion 21 provided in the non-contact power receiving device 6 are placed at positions opposed to each other.

The induction heating device 1 includes a heating coil 2 which serves as a feeding coil, an inverter 3 adapted to supply high-frequency electric power to the heating coil 2, the light receiving portion 22 for detecting infrared rays, and a heating-side control portion 4. The light receiving portion 22 is adapted to detect the temperature of a load, such as a pan, which is placed on the top plate 5, based on the amount of infrared-ray radiation generated from the load. The heating-side control portion 4 controls semiconductor switches in the inverter 3, according to the output of the light receiving portion 22, and the like.

Further, the non-contact power receiving device 6 includes a load device 10 such as a container, a state detection portion 20 adapted to detect the state of the load device 10, such as the temperature and the like, the light emitting portion 21 adapted to emit light according to the state detected by the state detection portion 20, and an electric-power-reception-side control portion 9 which is adapted such that the result of the detection by the state detection portion 20 is inputted thereto and, further, is adapted to control the light-emission state of the light emitting portion 21.

Next, there will be described the non-contact power transmission device which employs the induction heating device 1 as a power-supply device, such that the non-contact power receiving device having the aforementioned structure according to the first embodiment is mounted on the induction heating device 1, with respect to the operations and effects.

In the induction heating device 1, the heating-side control portion 4 converts electric power supplied from an AC power supply, which is not illustrated, into high-frequency electric power with frequencies of 20 kHz to 100 kHz, using the semiconductor switches in the inverter 3, and the high-frequency electric power resulted from the conversion is supplied to the heating coil 2. The high-frequency electric power supplied to the heating coil 2 is transmitted to the load device 10 in the non-contact power receiving device 6.

Further, the light receiving portion 22 provided in the induction heating device 1 is adapted to detect, through the top plate 5, infrared rays generated from the load, due to heat generation from the load, which is caused by a high-frequency magnetic field generated from the heating coil 2, when the load, which is a pan or the like, is placed on the top plate 5 and is subjected to induction heating. The value detected by the light receiving portion 22 is inputted to the heating-side control portion 4 and, thus, is used for temperature control by the heating-side control portion 4.

In cases where the non-contact power receiving device 6 is placed on the top plate 5 in the induction heating device 1, and this induction heating device 1 is used as a power-supply device, a high-frequency magnetic field is supplied from the heating coil 2 to the load device 10 in the non-contact power receiving device 6, so that the load device 10 is supplied with electric power. Further, depending on the electric power supplied, the value detected by the state detection portion 20 adapted to detect the state (for example, a temperature, a voltage, an electric current) in the load device 10 is changed. If the value detected by the state detection portion 20 reaches an upper limit of set values, the electric-power-reception-side control portion 9 causes the light emitting portion 21 to emit light, thereby radiating light containing infrared ray components.

As a result, the light receiving portion 22, which is faced to the light emitting portion 21 with the top plate 5 interposed therebetween, is irradiated with optical energy containing infrared ray components, and the light receiving portion 22 outputs a high-temperature detection signal to the heating-side control portion 4. The heating-side control portion 4, to which the high-temperature detection signal has been inputted from the light receiving portion 22, stops the operation of the inverter 3, thereby stopping the supply of electric power.

After the inverter 3 has been stopped operating to stop the supply of electric power, as described above, if the value detected by the state detection portion 20 reaches a lower limit of the set values, the electric-power-reception-side control portion 9 stops the light emission from the light emitting portion 21. As a result, no high-temperature detection signal from the light receiving portion 22 is inputted to the heating-side control portion 4, namely the high-temperature detection is released, and, therefore, the inverter 3 is driven, thereby restarting the supply of electric power to the load device 10.

By continuing the aforementioned operations, it is possible to realize supply of desired electric power to the load device 10, with the non-contact power transmission device according to the first embodiment.

The light emitting portion 21 can be constituted by any light emitting device having infrared ray components which can pass through the top plate 5 and can reach the light receiving portion 22 and, thus, is not particularly limited. For example, a light emitting device such as an LED can be employed. Further, the amount of light emitted from the light emitting portion 21 is required only to be an amount of light enough to enable the light receiving portion 22 to detect higher temperatures, such as temperatures equal to or higher than 300°C, for example, and to output a high-temperature detection signal.

The light receiving portion 22 can be constituted by a quantum-type infrared-ray sensor such as a photo diode mounted in an induction heating device, or can be constituted by a thermoelectric-type infrared-ray sensor such as a thermopile. However, the light receiving portion 22 can be constituted by any system capable of detecting optical energy from the non-contact power receiving device, through the top plate 5.

Further, in cases where the load device 10 is a metal container, the state detection portion 20 is constituted by a temperature detection portion for detecting the temperature of such a metal container, and the electric-power-reception-side control portion 9 controls the time interval for which the light emitting portion 21 emits light, such that the temperature detected by the temperature detection portion falls within a set-temperature range. With the above-mentioned structure, it is possible to perform temperature control for the load device 10 which is a metal container.

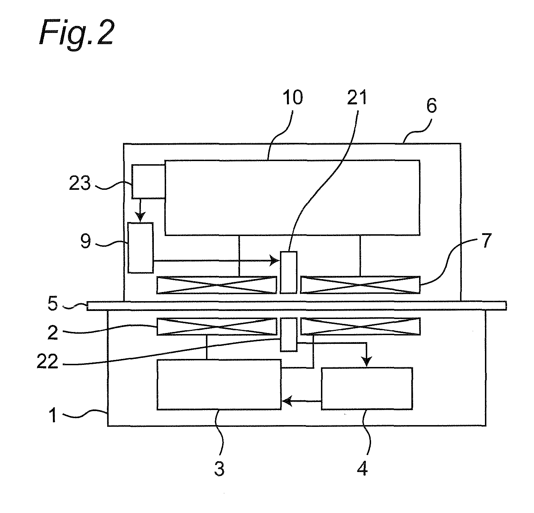

Fig. 2 is a view illustrating, in a circuit block manner, an example of the internal structure of the non-contact power receiving device according to the first embodiment. In the non-contact power receiving device 6 illustrated in Fig. 2, an electric-power receiving coil 7 is structured to receive a high-frequency magnetic field supplied from the heating coil 2 in the induction heating device 1 and to output electric power. The non-contact power receiving device 6 is adapted such that the load device 10 is supplied with electric power from the electric-power receiving coil 7.

When the electric-power receiving coil 7 supplies electric power to the load device 10, the temperature of the load device 10 is detected by a temperature detection portion 23 as the state detection portion, and information about the detected temperature is inputted to the electric-power-reception-side control portion 9. The electric-power-reception-side control portion 9 controls the time interval for which the light emitting portion 21 emits light, such that the temperature detected by the temperature detection portion 23 falls within a set-temperature range.

Due to the aforementioned structure, it is possible to perform temperature control for the load device 10, with the non-contact power receiving device illustrated in Fig. 2. The temperature detection portion 23 can be constituted by a component adapted to perform detection based on a resistance value, such as a thermistor, a component adapted to perform detection based on an amount of light of radiant energy, and the like, but is not particularly limited.

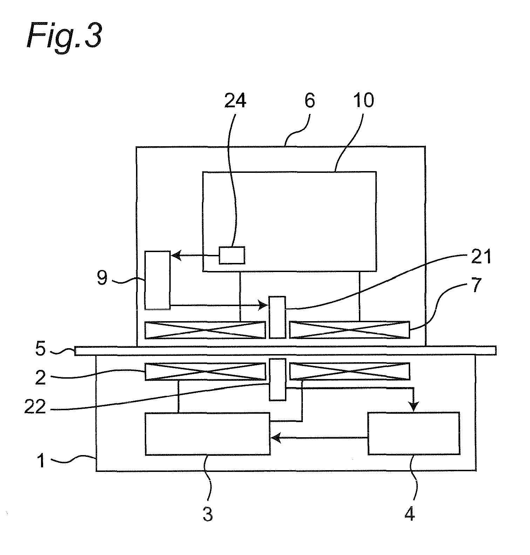

Fig. 3 is a view illustrating, in a circuit block manner, another example of the internal structure of the non-contact power receiving device according to the first embodiment. The non-contact power receiving device illustrated in Fig. 3 is structured to be provided with a voltage detection portion 24 as a state detection portion for detecting the voltage across the opposite ends of an electric-power receiving coil 7 or a voltage in the circuit in the load device 10. Since the voltage detection portion 24 is provided as the state detection portion as described above, the electric-power-reception-side control portion 9 is adapted to control the time interval for which the light emitting portion 21 emits light, such that the voltage value detected by the voltage detection portion 24 falls within a set range. With the non-contact power receiving device having the above-mentioned structure, it is possible to supply a constant voltage to the load device 10.

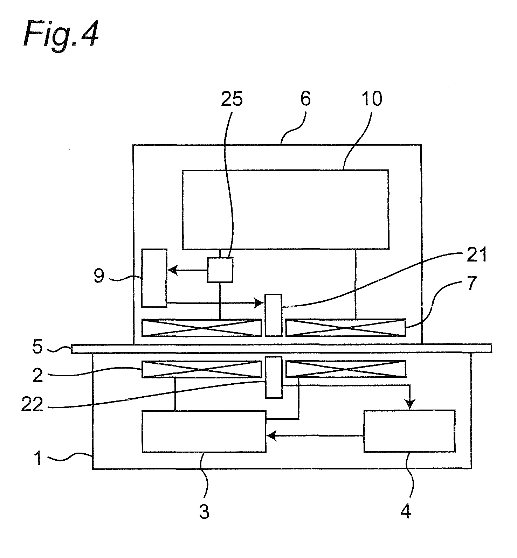

Fig. 4 is a view illustrating, in a circuit block manner, yet another example of the internal structure of the non-contact power receiving device according to the first embodiment. The non-contact power receiving device illustrated in Fig. 4 is provided with an electric-current detection portion 25 as the state detection portion. The electric-current detection portion 25, which is constituted by a current transformer (CT) and the like, is adapted to detect an electric current flowing through an electric-power receiving coil 7 or an electric current in the load device 10. With the above-mentioned structure, the electric-power-reception-side control portion 9 controls the time interval for which the light emitting portion 21 emits light, such that the electric current value detected by the electric-current detection portion 25 is a value within a set range.

By providing the temperature detection portion 23, the voltage detection portion 24 and/or the electric-current detection portion 25, as the state detection portion 20 in the non-contact power receiving device according to the first embodiment, it is possible to perform various types of control for the load device 10.

As described above, the non-contact power receiving device 6 according to the first embodiment is adapted to utilize the load-temperature detecting function, which has been equipped in the ordinary induction heating device 1, wherein this load-temperature detecting function is functions of detecting infrared rays (light) from a load to detect the load temperature and, further, of controlling the heating operation in the induction heating device 1, for example, stopping it, when the load device is at a temperature equal to or higher than a predetermined temperature (a higher temperature). As described above, the non-contact power receiving device 6 according to the first embodiment is adapted to control the electric power received by the non-contact power receiving device 6, by utilizing the heating-operation controlling function based on the infrared-ray temperature detection, which has been equipped in the induction heating device 1.

The non-contact power receiving device 6 according to the first embodiment is provided with the light emitting portion 21 adapted to generate an optical signal according to the state of the load device 10 in the non-contact power receiving device 6. Further, if the load device 10 reaches a predetermined state, the light emitting portion 21 is caused to emit light, which brings the induction heating device 1 into a running stop state, thereby stopping the supply of electric power. Also, the induction heating device can be adapted to reduce the electric power supplied therefrom, on receiving light from the light emitting portion 21, if the load device 10 reaches a predetermined state. Further, when the load device 10 has been departed from the predetermined condition, the light emitting portion 21 is turned off, which causes the induction heating device 1 to restart the supply of electric power. This enables electric power adjustments. Accordingly, with the structure according to the first embodiment, it is possible to realize a non-contact power receiving device with excellent convenience which is capable of electric power control with a simple structure.

### (Second Embodiment)

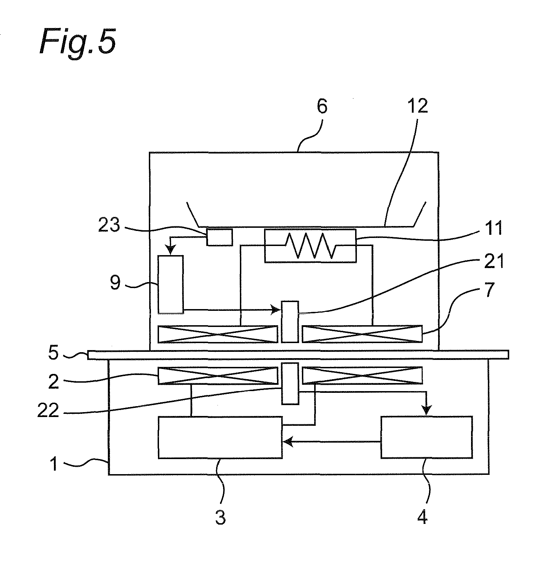

Hereinafter, with reference to Fig. 5, there will be described a non-contact power receiving device, and a non-contact power transmission device constituted by the non-contact power receiving device and an induction heating device (induction heating cooker), according to a second embodiment of the present invention. Fig. 5 is a view illustrating, in a circuit block manner, the structure of the non-contact power transmission device according to the second embodiment.

The structure according to the second embodiment is different from the structure according to the aforementioned first embodiment, in that an electric-power receiving coil 7, which receives a high-frequency magnetic field from a heating coil 2, is adapted to supply electric power to a load device 10 constituted by a heater 11 and a receiving plate 12 placed near and above the heater 11, and in that a temperature detection portion 23 is adapted to detect the temperature of the receiving plate 12 or of the vicinity of the receiving plate 12, the temperature of the heater 11, or the like.

Next, there will be described the non-contact power transmission device which employs the induction heating device 1 as a power-supply device, such that the non-contact power receiving device according to the second embodiment is mounted on the induction heating device 1, with respect to the operations and effects.

In the induction heating device 1, a heating-side control portion 4 converts electric power supplied from an AC power supply, which is not illustrated, into high-frequency electric power with frequencies of 20 kHz to 100 kHz, using the semiconductor switches in an inverter 3, and the high-frequency electric power resulted from the conversion is supplied to the heating coil 2. The high-frequency electric power supplied to the heating coil 2 is transmitted to the electric-power receiving coil 7 in the non-contact power receiving device 6.

The electric power supplied to the electric-power receiving coil 7 is supplied to the heater 11, which causes the heater 11 to generate heat. As a result, the receiving plate 12 placed just above or near the heater 11 is heated, thereby heating the food placed on the receiving plate 12.

When the food on the receiving plate 12 is being heated as described above, the temperature detection portion 23 detects the temperature of the vicinity of the receiving plate 12 or of the vicinity of the heater 11. If the temperature detected by the temperature detection portion 23 reaches a set value, an electric-power-reception-side control portion 9 causes a light emitting portion 21 to emit light, thereby radiating light containing infrared ray components.

As a result, the light receiving portion 22, which is faced to the light emitting portion 21 with the top plate 5 interposed therebetween, is irradiated with optical energy containing infrared ray components, and the light receiving portion 22 outputs a high-temperature detection signal to the heating-side control portion 4. The heating-side control portion 4, to which the high-temperature detection signal has been inputted from the light receiving portion 22, stops the operation of the inverter 3, thereby stopping the supply of electric power.

After the inverter 3 has been stopped operating to stop the supply of electric power, as described above, if the value detected by the temperature detection portion 23 reaches a lower limit of set values, the electric-power-reception-side control portion 9 stops the light emission from the light emitting portion 21. As a result, no high-temperature detection signal from the light receiving portion 22 is inputted to the heating-side control portion 4, namely the high-temperature detection is released, and, therefore, the inverter 3 is driven, thereby restarting the supply of electric power to the heater 11.

By continuing the aforementioned operations, it is possible to realize supply of desired electric power to the heater 11, thereby enabling proper temperature control, with the non-contact power transmission device according to the second embodiment.

Further, although the second embodiment has been described by exemplifying temperature control, it is also possible to perform desired electric power control, by detecting an electric current in the electric-power receiving coil 7 and, further, by causing the electric-power-reception-side control portion 9 to control the time interval for which the light emitting portion 21 emits light, according to the detected electric current.

The structure according to the present invention is not particularly limited and is required only to have a system capable of detecting the state of the load in the non-contact power receiving device 6 and of determining the time interval for which the light emitting portion 21 emits light according to the result of the detection.

Further, although the second embodiment has been described by exemplifying the heater 11 and the receiving plate 12, it is also possible to employ structures including a heating system having an electric-power-reception side heating coil connected to the electric-power receiving coil 7, and a receiving plate made of a magnetic metal, which is placed just above the electric-power reception side heating coil, a heating system having a metal container placed instead of the receiving plate 12, and the like, which can also offer the same effects.

As described above, the non-contact power receiving device 6 according to the second embodiment is adapted to utilize the load-temperature detecting function, which has been equipped in the ordinary induction heating device 1, wherein this load-temperature detecting function is a function of detecting infrared rays (light) from a load to detect the load temperature and, further, of controlling the heating operation in the induction heating device 1, for example, stopping it, when the load device is at a temperature equal to or higher than a predetermined temperature (a higher temperature). As described above, the non-contact power receiving device 6 according to the second embodiment is adapted to control the electric power received by the non-contact power receiving device 6, by utilizing the heating-operation controlling function based on the infrared-ray temperature detection, which has been equipped in the induction heating device 1.

The non-contact power receiving device 6 according to the second embodiment is provided with the temperature detection portion 23 for detecting the temperature in the vicinity of the heater 11 or the receiving plate 12, and with the light emitting portion 21 adapted to generate optical signals according to the value detected by the temperature detection portion 23. Further, if the value detected by the temperature detection portion 23 reaches an upper limit of set values, the light emitting portion 21 is caused to emit light, which brings the induction heating device 1 into a running stop state, thereby stopping the supply of electric power. Also, the induction heating device can be adapted to reduce the electric power supplied therefrom, on receiving light from the light emitting portion 21, if the value detected by the temperature detection portion 23 reaches the upper limit of the set values. Further, if the value detected by the temperature detection portion 23 reaches a lower limit of the set values, the light emitting portion 21 is turned off, which causes the induction heating device 1 to restart the supply of electric power. This enables electric power adjustments. Accordingly, with the structure according to the second embodiment, it is possible to realize a non-contact power receiving device with excellent convenience which is capable of electric power control with a simple structure.

### (Third Embodiment)

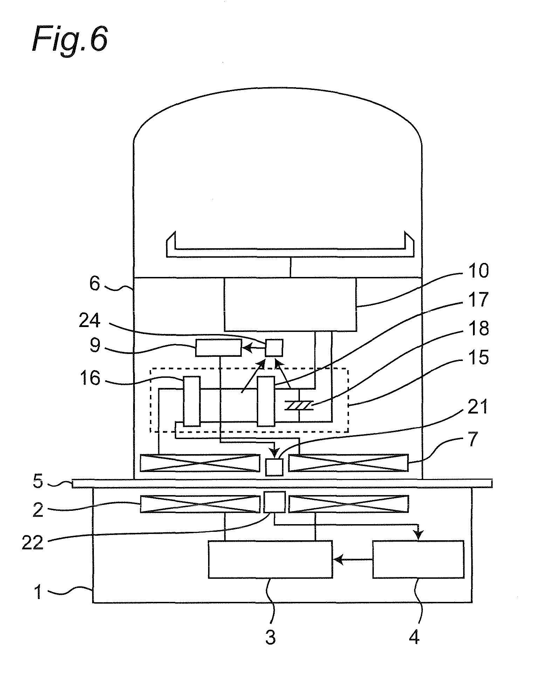

Hereinafter, with reference to Fig. 6, there will be described a non-contact power receiving device, and a non-contact power transmission device constituted by the non-contact power receiving device and an induction heating device (induction heating cooker), according to a third embodiment of the present invention. Fig. 6 is a view illustrating, in a circuit block manner, the structure of the non-contact power transmission device according to the third embodiment.

The structure according to the third embodiment is different from the structures according to the aforementioned first and second embodiments, in that an electric-power receiving coil 7 is connected to a load device 10 with a power supply circuit 15 interposed therebetween.

In the non-contact power receiving device according to the third embodiment, the power supply circuit 15 includes a rectification portion 16 for rectifying the voltage from the electric-power receiving coil 7, a voltage buck/boost portion 17 for controlling the output from the rectification portion 16 to a predetermined voltage value, a smoothing portion 18 for smoothing the voltage outputted to the load device 10, and a voltage detection portion 24 for detecting the output voltage and the like.

Next, there will be described the non-contact power transmission device which employs the induction heating device 1 as a power-supply device, such that the non-contact power receiving device 6 having the aforementioned structure according to the third embodiment is mounted on the induction heating device 1, with respect to the operations and effects.

In the induction heating device 1, the heating-side control portion 4 converts electric power supplied from an AC power supply, which is not illustrated, into high-frequency electric power with frequencies of 20 kHz to 100 kHz, using semiconductor switches in an inverter 3, and the high-frequency electric power resulted from the conversion is supplied to the heating coil 2. The high-frequency electric power supplied to the heating coil 2 is transmitted to the electric-power receiving coil 7 in the non-contact power receiving device 6.

In the power supply circuit 15, the high-frequency electric power inputted from the electric-power receiving coil 7 is rectified by the rectification portion 16, and the rectified electric power is inputted to the voltage buck/boost portion 17. The voltage buck/boost portion 17 creates a voltage having a required voltage value, and this voltage is smoothed by the smoothing portion 18 into a desired DC voltage, which is outputted to the load circuit 10.

When the DC voltage is created as described above, the voltage detection portion 24 detects the output voltage (the voltage from the smoothing portion 18) and the voltage from the rectification portion 16, and an electric-power-reception-side control portion 9 controls the operations of the voltage buck/boost portion 17 such that the aforementioned output voltage has a preset constant value and, further, the electric-power-reception-side control portion 9 controls the time interval for which the light emitting portion 21 emits light such that the voltage from the rectification portion 16 falls within a predetermined range.

Namely, if the voltage detected by the voltage detection portion 24 reaches an upper limit value in a set range, the light emitting portion 21 is caused to start emitting light, and the heating-side control portion 4 stops the inverter 3 through the light receiving portion 22, thereby stopping the supply of electric power from the induction heating device 1.

After the inverter 3 has been temporarily stopped as described above, if the voltage detected by the voltage detection portion 24 descends to reach a lower limit value in the set range, the light emitting portion 21 is stopped emitting light, and the heating-side control portion 4 restarts the operation of the inverter 3 through the light receiving portion 22, thereby restarting the supply of electric power from the induction heating device 1.

By repeating the aforementioned operations, it is possible to control the amount of electric power supplied from the induction heating device 1 and, further, it is possible to cause the input voltage to the power supply circuit 15 to fall within a constant range. Further, the load device 10 which is supplied with electric power from the power supply circuit 15 is not particularly limited and can be any appliance which is operated by DC voltages, such as a motor appliance, a battery charger for a rechargeable battery, and the like.

Further, when the load device 10 has a larger output, a user can adjust the input voltage from the induction heating device 1, namely he or she can make the set value larger, thereby providing desired outputs.

As described above, the non-contact power receiving device 6 according to the third embodiment is adapted to utilize the load-temperature detecting function, which has been equipped in the ordinary induction heating device 1, wherein this load-temperature detecting function is a function of detecting infrared rays (light) from a load to detect the load temperature and, further, of controlling the heating operation in the induction heating device 1, for example, stopping it, when the load device is at a temperature equal to or higher than a predetermined temperature (a higher temperature). As described above, the non-contact power receiving device 6 according to the third embodiment is adapted to control the electric power received by the non-contact power receiving device 6, by utilizing the heating-operation controlling function based on the infrared-ray temperature detection, which has been equipped in the induction heating device 1.

The non-contact power receiving device 6 according to the third embodiment is provided with the light emitting portion 21 adapted to generate an optical signal according to the voltage detected by the voltage detection portion 24, which is adapted to detect a voltage in the power supply circuit 15. Further, if the voltage detected by the voltage detection portion 24 reaches the upper limit in the set values, the light emitting portion 21 is caused to emit light, which brings the induction heating device 1 into a running stop state, thereby stopping the supply of electric power. Also, the induction heating device can be adapted to reduce the electric power supplied therefrom, on receiving light from the light emitting portion 21, if the voltage detected by the voltage detection portion 24 reaches the upper limit in the set values. Further, if the voltage detected by the voltage detection portion 24 reaches the lower limit in the set values, the light emitting portion 21 is turned off, which causes the induction heating device 1 to restart the supply of electric power. This enables electric power adjustments. Accordingly, with the structure according to the third embodiment, it is possible to realize a non-contact power receiving device with excellent convenience which is capable of electric power control with a simple structure.

As described above, as described in the respective embodiments, according to the present invention, the non-contact power receiving device adapted to receive electric power from the induction heating device is structured to control the electric power supplied from the induction heating device, by utilizing the high-temperature detecting function through the infrared-ray temperature detection means for the load, which has been equipped in the induction heating device. Therefore, the non-contact power receiving device according to the present invention is provided with the light emitting portion adapted to generate optical signals according to the state of the load device. Further, the non-contact power receiving device according to the present invention is adapted to cause the light emitting portion to emit light, which causes the induction heating device to recognize that the load is being at a higher temperature and, further, to stop the heating operation for stopping the feeding operation, if the load device reaches a predetermined state. Further, when the load device has departed from the predetermined condition, the non-contact power receiving device turns off the light emitting portion, which restarts the feeding operation. This enables adjusting the electric power. Accordingly, in the present invention, since the function equipped in an ordinary induction heating device is utilized, it is possible to realize a non-contact power receiving device and a non-contact power transmission device with excellent convenience which are capable of electric-power transmission control with a simple structure, without necessitating preliminarily incorporating a new function in the induction heating device.

### Industrial Applicability

The non-contact power receiving device according to the present invention is adapted to utilize the load-temperature detecting function, which has been equipped in an induction heating device, wherein this load-temperature detecting function is a function of detecting infrared rays from a load and of stopping the heating operation when the load is at a temperature equal to or higher than a predetermined temperature. Therefore, the non-contact power receiving device according to the present invention is capable of temperature control with higher accuracy and, therefore, can be also applied to applications of high-performance pans equipped with temperature detecting functions, such as automated-cooking pans. Therefore, the non-contact power receiving device according to the present invention has excellent general versatility and enables employing various types of induction heating devices as power-supply devices.

### Reference Signs List

- 1: Induction heating device
- 2: Heating coil
- 3: Inverter
- 4: Heating-side control portion
- 5: Top plate
- 6: Non-contact power receiving device
- 7: Electric-power receiving coil
- 9: Electric-power-reception-side control portion
- 10: Load device
- 11: Heater
- 12: Receiving plate
- 15: Power supply circuit
- 16: Rectification portion
- 17: Voltage buck/boost portion
- 18: Smoothing portion
- 20: State detection portion
- 21: Light emitting portion
- 22: Light receiving portion
- 23: Temperature detection portion
- 24: Voltage detection portion
- 25: Electric-current detection portion

## Claims

1. A non-contact power receiving device adapted to use, as a power-supply device, an induction heating device equipped with a load-temperature detecting functions of detecting light from a load to detect a temperature of the load and of controlling an induction heating operation when the temperature of the load is equal to or higher than a predetermined temperature, and the non-contact power receiving device comprising:
a load device adapted to be supplied with the high-frequency electric power from the induction heating device,
a state detection portion adapted to detect a state of the load device,
a light emitting portion adapted to generate an optical signal according to a detection signal indicative of the state of the load device which has been detected by the state detection portion, and
an electric-power-reception-side control portion adapted to control the light emitting portion,
wherein the electric-power-reception-side control portion is adapted to cause the light emitting portion to emit light to operate the load-temperature detecting function in the induction heating device for controlling the supply of the electric power from the induction heating device, when the value detected by the state detection portion is equal to or more than a set value.

2. The non-contact power receiving device according to Claim 1, further comprising an electric-power receiving coil adapted to receive a high-frequency magnetic field from the induction heating device and to supply it to the load device,
wherein the electric-power-reception-side control portion is adapted to cause the light emitting portion to emit light to operate the load-temperature detecting function in the induction heating device for stopping the supply of the electric power to the electric-power receiving coil from the induction heating device, when the value detected by the state detection portion is equal to or more than a set value.

3. The non-contact power receiving device according to Claim 1 or 2,
wherein the state detection portion comprises a temperature detection portion for detecting a temperature in the load device, and the electric-power-reception-side control portion is adapted to control a time interval for which the light emitting portion emits light, such that the temperature detected by the temperature detection portion falls within a predetermined temperature range.

4. The non-contact power receiving device according to Claim 1 or 2,
wherein the state detection portion comprises a voltage detection portion for detecting a voltage in the load device, and the electric-power-reception-side control portion is adapted to control a time interval for which the light emitting portion emits light, such that the voltage detection portion falls within a predetermined voltage range.

5. The non-contact power receiving device according to Claim 1 or 2,
wherein the state detection portion comprises an electric-current detection portion for detecting an electric current in the load device, and the electric-power-reception-side control portion is adapted to control a time interval for which the light emitting portion emits light, such that the electric-current detection portion falls within a predetermined electric-current range.

6. A non-contact power transmission device comprising an induction heating device being equipped with a load-temperature detecting functions of detecting light from a load to detect a temperature of the load and of controlling an induction heating operation when the temperature of the load is equal to or higher than a predetermined temperature, and a non-contact power receiving device being adapted to be supplied with electric power through a high-frequency magnetic field from the induction heating device,
wherein the non-contact power receiving device comprises:
a load device adapted to be supplied with a high-frequency electric power from the induction heating device,
a state detection portion adapted to detect a state of the load device,
a light emitting portion adapted to generate an optical signal according to a detection signal indicative of the state of the load device which has been detected by the state detection portion, and
an electric-power-reception-side control portion adapted to control the light emitting portion,
wherein the electric-power-reception-side control portion is adapted to cause the light emitting portion to emit light to operate the load-temperature detecting function in the induction heating device for controlling the supply of the electric power from the induction heating device, when the value detected by the state detection portion is equal to or more than a set value.
